(19) Europäisches Patentamt / European Patent Office / Office européen des brevets

(11) **EP 3 134 248 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **15725867.4**

(22) Anmeldetag: **27.04.2015**

(51) Int Cl.:
**B29C 49/48** (2006.01)

(86) Internationale Anmeldenummer:
**PCT/IB2015/000580**

(87) Internationale Veröffentlichungsnummer:
**WO 2015/162490 (29.10.2015 Gazette 2015/43)**

(54) **VORRICHTUNG UND VERFAHREN ZUR ZYKLUS- UND AUFWANDSOPTIMIERTEN THERMISCHEN UMFORMUNG VON SCHLAUCHROHLINGEN**

DEVICE AND METHOD FOR CYCLE- AND COST-OPTIMIZED THERMAL TRANSFORMATION OF HOSE BLANKS

DISPOSITIF ET PROCÉDÉ DE FORMAGE À CHAUD D'ÉBAUCHES DE TUYAU OPTIMISÉ EN TERMES DE CYCLE ET DE COMPLEXITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014 DE 102014005902**
**16.02.2015 DE 102015001828**

(43) Veröffentlichungstag der Anmeldung:
**01.03.2017 Patentblatt 2017/09**

(73) Patentinhaber:
• **Creative Balloons GmbH**
**68753 Waghäusel (DE)**
• **Göbel, Fred**
**69259 Wilhelmsfeld (DE)**

(72) Erfinder: **GÖBEL, Fred**
**69259 Wilhelmsfeld (DE)**

(74) Vertreter: **Küchler, Stefan**
**Patentanwalt**
**Färberstrasse 20**
**90402 Nürnberg (DE)**

(56) Entgegenhaltungen:
**EP-A1- 2 216 066       DE-A1-102010 020 090**
**DE-A1-102011 114 083**

**Beschreibung**

Die vorliegende Erfindung richtet sich auf eine Vorrichtung und auf ein Verfahren zum thermischen Umformen von Schlauchrohlingen aus vorzugsweise vorextrudiertem, elastischen Rohschlauchmaterial, wobei sich der Schlauchrohling während der Umformung in einem schalenförmigen, ein- oder mehrteiligen Formungswerkzeug mit einer Hohlform befindet, wobei die Innenseite der Hohlform als Negativ der dem Schlauchrohling aufzuprägenden Form entspricht, mit dem Zweck der Herstellung komplex ausgeformter Schlauchelemente aus ungeformtem Rohschlauchmaterial, wie sie beispielsweise im Fahrzeugbereich als Radinnenschläuche oder im Bereich der Medizintechnik bei der Herstellung von geformten Ballon- und Schlauchkomponenten für zu- oder ableitende Katheter zum Einsatz kommen kann. Ferner wird ein Verfahren zur besonders wirtschaftlichen, prozess- und aufwandsoptimierten Großserienherstellung derartiger Schlauchelemente vorgestellt.

Die Erfindung geht vorzugsweise von der Formung vorextrudierter Schlauchrohlinge aus elastischem Polyurethan (PUR) aus. Anhand der konkreten Anwendungsbeispiele eines auszuformenden Grundkörpers einer Stuhldrainage für die geschlossene Ableitung von Stuhl aus dem Patientenrektum in ein beutelartiges Auffanggefäß, sowie der Ausformung eines Fahrradschlauches soll im folgenden Text dargestellt werden, wie ein konventionell extrudierter PUR-Schlauchrohling durch thermische Umformung zu einem hinsichtlich Gestalt, Funktion und Beständigkeit optimierten Produkt verarbeitet werden kann, und/oder zu einem Produkt, welches durch primäre Extrusion in seiner spezifischen Kombination von Wandstärke und Durchmesser nicht herstellbar ist. Die Erfindung geht dabei vor allem auf die Geschwindigkeit des thermischen Umformungsprozesses, als wesentlicher kostenoptimierender Faktor bei der Herstellung großer Produktmengen ein. Der Aspekt der Zyklusgeschwindigkeit wird in besonderem Maße bei der Gestaltung der für den optimierten Prozess erforderlichen Formwerkzeuge, als auch bei der Einbringung und Ableitung der thermischen Energie in das ausformende Werkzeug berücksichtigt.

Vorrichtungen zur zykluszeit-optimierten Formung von Ballonelementen aus vorextrudiertem Schlauchmaterial sind bereits beschrieben. Die WO 2013/041234 oder die dazu im Wesentlichen inhaltsgleiche DE 10 2011 114 083 A1 beschreibt eine Formungsvorrichtung, bei der der Schlauchrohling direkt in ein, mit einem Temperierungsmedium durchspültes Formwerkzeug hineingeblasen wird. Das umzuformende Schlauchelement liegt der Wandung der Formungskavität des primär temperierten Formungswerkzeuges unmittelbar an. Das Formwerkzeug weist einen, mit einem temperierenden Medium durchspülten Hohlraum auf und ist insgesamt möglichst massearm ausgelegt, um bei einem zyklischen Temperaturwechsel im Werkzeug ein möglichst schnelles Erreichen der jeweiligen Formungstemperatur auf der Oberfläche der Formungskavität zu ermöglichen. In einer bevorzugten Ausführungsform wird ein Werkzeugtyp beschrieben, welcher aus zwei längsgeteilten Halbschalen aufgebaut ist, deren Kavitäten sich, durch Verfahren der Halbschalen von lateral zum Rohling hin, über dem Rohling schließen. Die temperierenden Halbschalen bleiben über den gesamten Verlauf der Blasformung, also die Erhitzung und anschließende Kühlung des Werkstückes, geschlossen. Die halbschalenartige Werkzeuganordnung weist ferner die Möglichkeit zur senkrechten relativen Verfahrbarkeit zum Schlauchrohling auf. Im beschriebenen speziellen Fall soll der Schlauchrohling vor dem eigentlichen Blasvorgang vortemperiert und/oder vorgeformt werden. Hierzu fährt die Form über den Rohling, sich jeweils längs öffnend und wieder schließend, über verschiedene Werkzeugetagen hinweg, auf und ab. Jeder Funktionsetage entsprechend, kann optional eine spezifische Temperatur im Werkzeug eingestellt werden. Das Verfahren eignet sich zur raschen Ausformung kleiner Schlauch- oder Ballonkomponenten, wie diese zum Beispiel für gängige medizinische Katheterprodukte benötigt werden. Für großvolumige Komponenten, besonders lange Komponenten, für Komponenten, die im Segmentdurchmesser stark schwanken, für die kostengünstige Herstellung langer, extrem dünnwandiger Schlauchkomponenten, sowie für in großen Mengen herzustellende Körper ist das vorgestellte Verfahren jedoch ungeeignet, da die für den beschriebenen Formungsweg erforderlichen Werkzeugmassen zum einen relativ groß ausfallen und zum anderen im Zyklusverlauf zeit- und energieintensiv alternierend temperiert bzw. wechselweise beheizt und gekühlt werden müssen.

Die DE 10 2010 020 090 A1 betrifft ein Werkzeug zur Formung von Artikeln aus thermoplastischem Kunststoff durch Extrusions- oder Streckblasformen, wobei das Werkzeug wenigstens zwei zueinander komplementäre Formen umfasst, die wenigstens eine Kavität zur Ausformung eines Kunststoffartikels bilden, wobei jede Form aus wenigstens zwei Formteilen zusammengesetzt ist und einen Formgrundkörper sowie wenigstens einen, wenigstens eine Teilkavität aufweisenden Formaufbau umfasst, und wobei das Werkzeug wenigstens eine Leitung für den Umlauf eines Kühl- oder Heizmittels umfasst, die zumindest abschnittsweise als Nutkanal ausgebildet ist, der im Bereich einer Trennebene zwischen dem Formgrundkörper und dem Formaufbau verläuft. Zwar sind bei dieser Anordnung der Formgrundkörper und der Formaufbau voneinander lösbar ausgebildet; dabei öffnet sich jedoch der normalerweise durch das jeweils andere Element abgedeckte Nutkanal, und das Kühl- oder Heizmittel entweicht aus seinem Kreislauf. Daher kann der Formaufbau nur dann von dem Formgrundkörper gelöst werden, wenn das Werkzeug eingerichtet wird, keinesfalls jedoch während des laufenden Betriebs.

Die EP 2 216 066 A1 offenbart eine Form zur Herstellung eines Ballons auf einem Plastikrohr, mit einer oberen und einer unteren Schale, welche zwischen sich einen Formungshohlaum definieren. Beide Schalen sind als Hohlkörper mit einer äußeren Wand und einer inneren Wand ausgebildet, in deren Hohlraum ein Kühlmittel zirkulieren kann. Ein Heizmittel wird dagegen vor einer Ausformung unmittelbar in den Formungshohlraum eingefüllt und sodann wieder mittels Unterdruck daraus entfernt. Bei einer solchen Vorgehensweise gelangt das Heizmittel jedoch in direkten Kontakt mit dem auszuformenden Ballonmaterial. Dies grenzt die Möglichkeiten verwendbarer Materialien nicht unerheblich ein, weil sichergestellt sein muss, dass das Heizmittel nicht mit dem auszuformenden Material chemisch reagiert, insbesondere bei den herrschenden, erhöhten Temperaturen.

Radinnenschläuche auf PUR-Basis sind im Handel bekannt und in verschiedenen Typen verfügbar. Die technische Herstellung der Produkte basiert in der Regel auf endlos-extrudiertem Rochschlauch-Halbzeug, welches auf eine entsprechende Länge zugeschnitten wird und deren freie Enden direkt, also ohne weiteren Formungsschritt, End-zu-End zu einem geschlossenen Ringelement verschweißt oder verklebt werden.

Bei der üblichen End-zu-End-Verschweißung der Schlauchenden, wie diese beispielsweise in Fahrradschläuchen vom Typ Eclipse Microsystems GmbH, Ebmatingen, Schweiz, durchgeführt wird, wird in der Regel kein optisch und funktionell zufriedenstellendes Ergebnis erreicht. Zwar sind die Fügestellen in der Regel mechanisch ausreichend belastbar, der durch den Schweiß-Prozess entstehende, nach Außen gerichtete Saum ist jedoch in seiner Ausbildung erheblich und beeinträchtigt neben der Optik des Produktes unter Umständen auch dessen Laufeigenschaften bzw. führt im dauerhaften Betrieb zu einer Schwächung des Radmantels oder auch der Schlauchwandung an der Fügestelle selbst.

Da das verwendete Rohschlauchmaterial in der Regel im Folienblasverfahren, also durch vertikale Extrusion aus einer Schmelze hergestellt wird, wird der Schlauchkörper in der Regel als flaches Band aufgewickelt und behält diese Bandstruktur über den gesamten weiteren Bearbeitungsverlauf des Produktes hinweg bei. Durch die schnell laufende vertikale Extrusion sind Schwankungen im Schlauchdurchmesser und in der Wandungsstärke des Schlauchmantels die Regel. Diese können sich auf die Funktion und die Beständigkeit des Produktes nachteiligen auswirken.

Aus den Nachteilen des beschriebenen Standes der Technik resultiert das die Erfindung initiierende Problem, wie eine zyklus- und aufwandsoptimierten thermischen Formung bzw. Umformung eines extrudierten Rohschlauches realisiert werden kann, wobei Temperierungsmedien mit unterschiedlichen Temperaturen verwendet werden können, ohne dass durch eine Vermischung derselben die Temperaturen sich ändern; auch soll nach Möglichkeit keines der Temperierungsmedien mit dem zu extrudierenden Rohschlauch in Kontakt gelangen.

Die Lösung dieses Problems gelingt im Rahmen eines gattungsgemäßen Verfahrens zum thermischen Umformen von Schlauchrohlingen aus vorzugsweise vorextrudiertem, elastischen Rohschlauchmaterial dadurch, dass die zur Umformung erforderliche Temperierung des Formungswerkzeuges durch Temperierungselemente mit sich formschlüssig über dem Werkzeug schließenden Halb- oder Teilschalen erfolgt, deren dem Formungswerkzeug zugewandte Innenseiten kongruent zur Außenseite des Formwerkzeugs ausgebildet sind, während im Formungswerkzeug selbst keinerlei Temperierungseinrichtung integriert ist, insbesondere keinerlei Kanäle oder sonstige Hohlräume zum Zirkulieren eines Temperierungsmediums, und wobei die Temperatur jedes Temperierungselementes im Prozessverlauf konstant gehalten wird, während zur Veränderung der Temperatur des Formungswerkzeug ein anderes Temperierungselement mit einer entsprechenden, konstanten Temperatur an das Formungswerkzeug herangefahren wird.

Eine gattungsgemäße, für dieses Verfahren verwendbare Vorrichtung zeichnet sich dadurch aus, dass das Formungswerkzeug frei von inneren Kanälen und sonstigen Hohlräumen für das Zirkulieren eines Temperierungsmediums ist, während zur Temperierung des Formungswerkzeuges davon getrennte Temperierungselemente mit sich formschlüssig über dem Werkzeug schließenden Halb- oder Teilschalen vorgesehen sind, deren dem Formungswerkzeug zugewandte Innenseiten kongruent zur Außenseite des Formwerkzeugs ausgebildet sind, und welche eine Einrichtung aufweisen, um die Temperatur jedes Temperierungselementes im Prozessverlauf konstant zu halten, insbesondere innere Hohlräume zur Perfusion eines Temperiermediums, und wobei wenigstens eine Mechanik vorgesehen ist, um wahlweise verschiedene Temperierelemente mit unterschiedlichen Temperaturen um das Formungswerkzeug zu schließen.

Zur zykluszeitoptimierten Umformung schlägt die Erfindung damit energiezuführende oder ableitende Systeme vor, welche konstant temperiert, also nicht wechselweise temperiert werden, und somit ihre Temperatur während des Formungsprozesses weitestgehend konstant halten. Ferner wird eine rasche Energieübertragung von der Energiequelle auf den Rohling ermöglicht, indem die zu temperierenden Formmassen möglichst klein gehalten, und die Wandung der Formwerkzeuge möglichst kontursymmetrisch zur Kontur der Werkstücke ausgeführt werden. Ferner werden im bevorzugten Ausführungsfall die energieübertragenden Flächen der die Formwerkzeuge aufnehmenden Temperierungsvorrichtungen formkongruent bzw. kontursymmetrisch zur jeweiligen Außenfläche der Formwerkzeuge ausgeführt.

Die vorliegende Erfindung beschreibt damit zum einen Möglichkeiten der zyklus- und aufwandsoptimierten thermischen Formung bzw. Umformung eines extrudierten Rohschlauches, und geht zum anderen auf besondere, für die Weiterverarbeitung des Rohlings bzw. die Funktion und Optik vorteilhafte Formungsdetails ein, die durch den beschriebenen Umformungsprozess im fertigen Radinnenschlauch ermöglicht werden.

Insbesondere kann der Schlauchmantel durch die beschriebene thermische Umformung im Bereich seiner Enden mit spezifischen Formungsdetails versehen werden, welche insbesondere die optische Erscheinung und die mechanische Belastbarkeit der End-zu-End-Verbindung verbessern. Die Erfindung schlägt hierzu die Ausformung muffenartiger Verbindungsstrukturen vor, die vor allem bei niedrigen Wandungsstärken des Schlauchmantels durch einfache Ineinandersteckung eines jeweils präzise geformten männlichen und weiblichen Elementes eine dicht schließende Fügung der Schlauchendstücke ermöglichen. Derartige Muffen-Systeme erschließen vor allem bei folienartig dünnen Schlauchstrukturen erhebliche fertigungsökonomische Vorteile bei der Montage zu geschlossenen Ringstrukturen und gewährleisten eine hohe Belastungsstabilität im Fügebereich.

Die im Folgenden beschriebene Formung eines extrudierten Rohschlauchelementes beruht auf mehreren, auf das Schlauchmaterial wirkenden physikalischen Komponenten. Durch eine initiale Ausstreckung des Rohschlauches über seine Längsachse kommt es im Rohling, abhängig vom Materialtyp und den angewandten Verarbeitungsparametern bei der Rohschlauchextrusion, zu einer gesteigerten Ausrichtung bzw. Parallelisierung der amorph orientierten Polymerketten in Zugrichtung, was die Zug- und Reißfestigkeit des Materials verbessert. Die jeweils angewendete axiale Ausstreckung führt korrespondierend zu einer Ausdünnung der Schlauchwandung, wobei eventuelle Ungleichmäßigkeiten im Durchmesser und in der Wandstärke des Rohschlauches bis zu einem gewissen Grad verstreichen bzw. nivellieren und so vorteilhaft reduziert werden können. Der über seine Länge gestreckte Schlauchrohling wird nun in ein Formwerkzeug geblasen, welches in seiner Formungsoberfläche alle für die Montage, die Funktion und die Optik erforderlichen Oberflächenmerkmale abbildet. Da der gestreckte Schlauchrohling in der Regel einen Durchmesser aufweist, der den Durchmesser des Formwerkzeugs unterschreitet, kommt es neben der axialen Dehnung beim Blasvorgang zusätzlich zu einer radialen Aufdehnung des Schlauches, wobei der Schlauchmantel eine zusätzliche radiale polymere Orientierung erhält und seine Wandung noch weiter verdünnt wird. Der jeweilige Anteil der erreichten axialen und/oder radialen polymeren Orientierung bestimmt die dimensionale Stabilität des Schlauchkörpers bei Belastung mit Fülldruck bzw. die Stabilität bei einwirkenden Zug-, Reiß- und Punktionskräften. Überwiegt beispielsweise die radiale Dehnungskomponente bzw. geht diese mit einer bevorzugten radialen Orientierung der Ketten einher, kann eine Dehnungsmechanik des Schlauches erreicht werden, bei der sich bei Befüllung ein relativ exakt vorgegebenes Durchmessermaß einstellt, von welchem aus, bei weiterem Druckanstieg, nur noch eine geringe oder keine weitere relevante Dehnung mehr möglich ist. Ein derartiges Verhalten beugt z.B. Herniationen, wie diese bei aus Kautschuk gefertigten Schlauchmänteln zu beobachten sind, weitestgehend vor. Im anderen Beispiel, kann bei überwiegender axialer Streckung und Orientierung ein Schlauchmantel hergestellt werden, dessen innerer Schlauchumfang in Bezug zum Rad- oder Felgendurchmesser bei Befüllung relativ exakt eingestellt werden kann und sich so auf der Felge montiert dort auch bei hoher Beanspruchung im Lauf durchmesserstabil stabil verhält.

Der sich unter Beaufschlagung mit Blasdruck axial und radial in das Formwerkzeug hinein expandierende Schlauch liegt der Blasformwandung schließlich allseitig flächig an. Die Schlauchhülle wird anschließend durch Temperierung der Werkzeugwandung auf ein Niveau erhitzt, welches die jeweilig erreichte Konfiguration bzw. Orientierung der Polymerketten entspannt. Durch die anschließende Kühlung des ausgeformten Schlauchkörpers wird die erreichte Ausrichtung der Ketten fixiert und eine elastische Rückschrumpfung des Schlauchkörpers in seinen Ausgangszustand so vermieden. Da die Orientierung von Polymerketten im Allgemeinen mit einer Verbesserung der Stabilität einhergeht, bietet sich die Möglichkeit, trotz einer Reduzierung der Wandstärke die belastungsmechanische Stabilität zu erhalten oder zu verbessern und den Schlauch dadurch mit dimensionalen und/oder mechanischen Eigenschaften auszustatten, die durch eine alleinige, primäre Extrusion nicht erreichbar sind.

Die vorliegende Erfindung ermöglicht eine optimal aufwandsreduzierte Umformung von Schlauchrohlingen polyurethan-typischer Elastizität, indem sie das Temperierungselement vom eigentlichen Formungswerkzeug trennt, und das Temperierungselement an das den umzuformenden Rohling aufnehmende Formwerkzeug formschlüssig auf bestmögliche Passung der Kontaktflächen heranführt. Das Formungswerkzeug besteht im Falle des Radinnenschlauches vorzugsweise aus einem einfachen, im Wesentlichen durchgängig zylindrischen, dünnwandigen Rohrkörper, in dessen Oberfläche zum Beispiel alle für die ringschließende Montage der Schlauchenden erforderlichen oder die Laufeigenschaften des Schlauches im Radmantel optimierenden Strukturmerkmale eingeprägt bzw. eingeformt sind. Die Formungsmerkmale der Werkzeuginnwandung bilden sich dabei vorzugsweise kontursymmetrisch auf der Werkzeugaußenwand ab. Das Formungswerkzeug kann alternativ zu einem durchgängigen Aufbau auch einen segmentierten, in Längsrichtung aneinandergereihten Aufbau aufweisen. Zur Stabilisierung über die Längsachse hinweg können die Formsegmente in ein dünnwandiges Außenrohr eingeschoben werden.

Im Kontaktbereich formkongruent und passgenau zur Oberfläche des Formungsrohres gestaltet, sieht die Erfindung ein System von backenartigen Temperierelementen vor, die zur Zuführung bzw. Ableitung von Wärmeenergie von lateral an die Oberfläche des Formungsrohres heranfahren und sich der Wandung des Rohrkörpers optimal schließend anschmiegen, so dass ein effizienter Energiefluss in und aus dem Formungsrohr gewährleistet ist. Anders als im Stand der Technik, wird das Formungsrohr, als eigentliches Formungswerkzeug, nicht durch in das Werkzeug integrierte, alternierend heizende und kühlende Strukturen temperiert, sondern durch sekundäre energiezuführende oder -ableitende Elemente, deren Temperierung auf einem durchgängig konstanten Niveau gehalten wird.

Der Rohrkörper und die beschriebenen Temperierbacken werden vorzugsweise in der Senkrechten relativ zueinander verfahren. So kann, je nach Prozessschritt, eine spezifisch temperierte Backeneinheit an das Formungsrohr herangefahren und zum Energieübertrag angepresst werden. Alternativ zur senkrechten relativen Verfahrung zwischen Formungsrohr und temperierenden Backen kann auch eine relative Verfahrung in der Horizontalen erfolgen.

Der besondere Vorteil der beschriebenen Vorrichtung besteht in der Option zur konstanten Temperaturführung im Temperierelement. Anders als bei der beschriebenen herkömmlichen Formungstechnik, können die backenartigen Temperierelemente massereich ausgestattet sein, um bei stattfindendem Kontakt mit dem Formungswerkzeug und der dann stattfinden Wärmeübertragung, eine möglichst gedämpfte, d.h. ohne für den laufenden Formungsprozess relevanten over- oder undershoot stattfindende Temperaturnachregelung zu erreichen.

Zur Steigerung der Geschwindigkeit der Energieübertragung vom Temperierungselement in das Formungswerkzeug kann das Temperierungselement auf einem höheren Temperaturniveau gehalten werden, wie es für die Umformung des Rohlings erforderlich ist. Die backenartigen Temperierelemente werden dann nur entsprechend kurzzeitig an die Oberfläche des Formungsrohres angepresst und nach Erreichen eines gewissen Energieübertrags dann wieder von der Oberfläche entfernt.

Die Aufheizung der Temperierungselemente erfolgt bevorzugt mit flüssigen Medien, bevorzugt mit Öl. Zur Ausformung eines PUR-Rohlings, beispielsweise der Sorte Elastollan 1185A, BASF, in einem Edelstahlrohr von 25mm Durchmesser und der Wandungsstärke von ca. 0,5mm, wird im Temperierungselement beispielsweise eine Temperatur von 250 Grad Celsius eingestellt. Die Kontaktzeit zwischen Rohr und Temperierungselement beträgt vorzugsweise ca. 8 bis 12 Sekunden, wobei auf der Formungsfläche des Rohres eine formende Temperatur von ca. 150 bis 170 °C erreicht wird.

Die Kühlung erfolgt durch entsprechende backenartige Temperierungselemente, welche, der besseren Wärmeleitfähigkeit wegen, bevorzugt mit Wasser auf konstanter Kühltemperatur gehalten werden. Der umgeformte Schlauch kann bei ca. 40 °C Temperatur des Formungsrohres entnommen werden.

Die vorgeschlagene relative Anordnung und Verfahrung von Formungswerkzeug und den Temperierelementen ist besonders für eine Endlosverarbeitung von Rohschlauch geeignet, der von einer Rolle abgewickelt und von Formungsschritt zu Formungsschritt fortlaufend von der Materialreserveseite her, durch das Formungswerkzeug hindurch, zur den Rohling belüftenden bzw. mit Druck beaufschlagenden Seite durchgezogen wird.

Ein wesentlicher Kostenvorteil in der Herstellung von Blasformwerkzeugen kann durch die erfindungsgemäße optionale Formprägung des Formungswerkzeuges erfolgen. Hierzu wird ein möglichst dünnwandiger Rohrkörper aus Metall vorzugsweise höherer Wärmeleitkapazität in eine prägende Außenform gepresst, was beispielsweise durch eine hydraulische Beaufschlagung des Rohrinneren mit Druck erreicht werden kann. Alternativ ist auch eine Tiefziehung von längsgeteilten Formungsrohren denkbar, wobei die resultierenden Halbschalen anschließend wieder zu geschlossenen Rohrkörpern dauerhaft verbunden bzw. verschweißt werden können. Durch beide Pressformungen können Formwerkzeuge einfach und kostengünstig hergestellt und multipliziert werden.

Die Erfindung beschreibt ferner längsgeteilte Formungswerkzeuge, die z.B. durch Fräsen oder Erodieren hergestellt werden können. Der Vorteil derartiger halbschalenartiger Werkzeuge besteht darin, dass der zugeführte Rochschlauch nicht auf ganzer Länge durch das Formungswerkzeug hindurchgeführt werden muss, bevor die axiale Streckung des Schlauchrohlings erfolgen kann. Die Längsteilung erlaubt es, bei geöffneten Halbschalen, den Schlauchrohling bis zu einer bestimmten Länge in die geöffnete Form einzuführen, und dann auf der den Schlauch zuführenden Seite vor dem Formwerkzeug durch Klemmung zu fixieren und zu verschließen. Auf der Seite des freien Schlauchendes wann dieser durch das Einführen eines den Schlauch belüftenden Pins gegriffen und dann schließlich in Streckung gebracht werden, bis das über dem Pin gegriffene Schlauchende außerhalb der geöffneten Halbschale positioniert ist. Erst dann erfolgt der Formschluss über dem gestreckten Schlauchelement. Die Länge des initial, also vor der Streckung in die Form eingebrachten Schlauchendes ist dabei derart bemessen, dass es bei Streckung über die Länge des Formwerkzeuges hinaus den für die Formung erforderlichen Streckungszustand erreicht. So kann optimal materialsparend ausgeformt, und streckungsbedingter Verschnitt von Rohschlauch vermieden werden. Ferner gestatten halbschalenartige Formen den raschen Zugang zur formenden Oberfläche, was im Falle der Ruptur eines Schlauches oder bei Wartungsmaßnahmen erforderlich ist.

Die erfindungsgemäß beschriebenen Formungswerkzeuge werden bevorzugt aus Vollmaterial zu halbschalenartigen, profilartigen Winkelstrukturen gefräst, welche die Montage auf einer den kraftvollen Formschluss antreibenden Mechanik erlauben und gleichzeitig eine maximale Reduktion der Wandungsstärke der Form erlauben. Ferner können derartige Winkel in sehr langer Baulänge ausgeführt werden. Sie eignen sich zum Beispiel in idealer Weise zum kostengünstigen Ausformen langer Ketten von ballonartigen Strukturen, wie diese für kostensensible Produkte in der Kathetertechnik benötigt werden.

In manchen Anwendungsfällen wie der Herstellung eines Produktes mit einem bestimmten Durchmesser und einer bestimmten Wandstärke, sind Profilierungen dagegen überflüssig, und das Formwerkzeug kann beispielsweise eine rein zylindrische Gestalt aufweisen, wodurch sich die Gesamtanordnung erheblich vereinfacht.

Wird das Formwerkzeug in kontursymmetrischer Weise hergestellt, weist also die äußere Wandung des Werkzeuges, in bestmöglicher Näherung, an den an der Ausformung des Rohlings beteiligten Punkten bzw. Flächen eine Kontur auf, die der inneren Kontur der Formungskavität entspricht, kann die Formungs-Temperatur auf der Innenseite der formenden Kavität, nach einer angemessenen Durchwärmungszeit der Formwandung, in guter Näherung auf der Außenseite der Kavität abgelesen werden, was die tatsächliche, formungsrelevante Temperierung des Rohlings innerhalb der Kavität auf der Außenseite der Kavität, z.B. durch infrarotoptische Abtastung, prinzipiell ablesbar macht. WO 2013/041234 stellt ein ähnliches Prinzip der Ablesbarkeit der Formungstemperatur auf einer kontursymmetrischen Formaußenseite vor, wobei allerdings die Wandung des Werkzeuges selbst mittels integrierter mediumführender Kanäle durch ein flüssiges Temperiermedium durchspült wird.

Eine infrarotoptische Ablesung der Kavität-Außenseite kann, wenn die Option entsprechend im Verfahrmechanismus integriert ist, z.B. im Moment erfolgen, wenn sich die temperierenden Backensysteme nach erfolgter Temperierung des Werkzeuges öffnen und relativ zum Werkzeug verfahren.

Weitere Merkmale, Eigenschaften, Vorteile und Wirkungen auf der Basis der Erfindung ergeben sich aus der folgenden Beschreibung bevorzugter Ausführungsformen der Erfindung sowie anhand der beiliegenden Zeichnung. Hierbei zeigt.

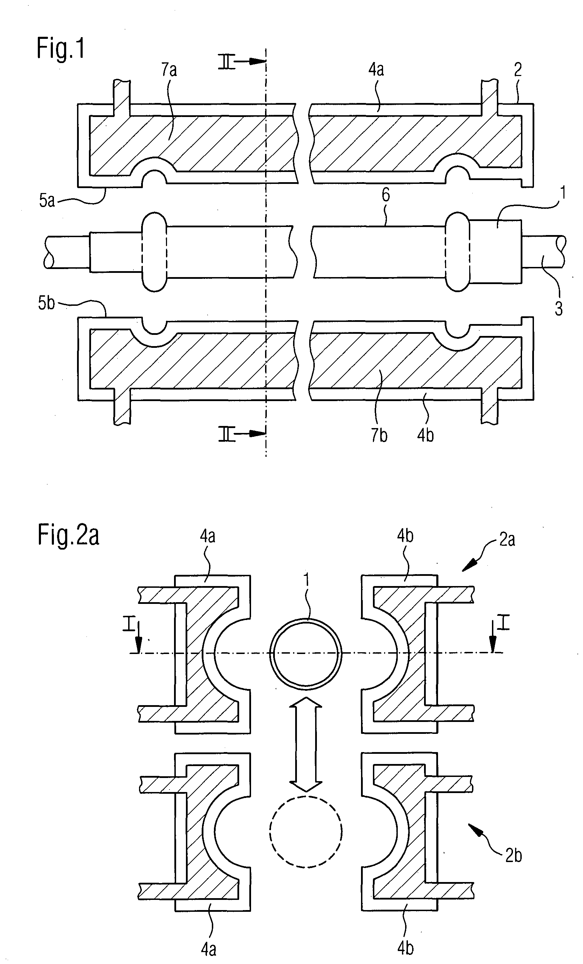

Fig. 1    eine erfindungsgemäße Vorrichtung zum Umformen von Schlauchrohlingen in einem Längsschnitt entlang einer horizontalen Ebene, wobei ein dünnwandiges, rohrartig zylindrisches Formungswerkzeug erkennbar ist sowie ein Paar geöffneter, halbschalenartiger Temperierelemente;

Fig. 2a    die Vorrichtung nach Fig. 1 in einem Schnitt quer zur Längsachse des dünnwandigen, rohrartig zylindrischen Formungswerkzeugs, mit zwei übereinander angeordneten Paaren von Temperierbacken zur formkongruenten Aufnahme des Formungswerkzeugs, wobei die Temperierbacken allesamt geöffnet sind;

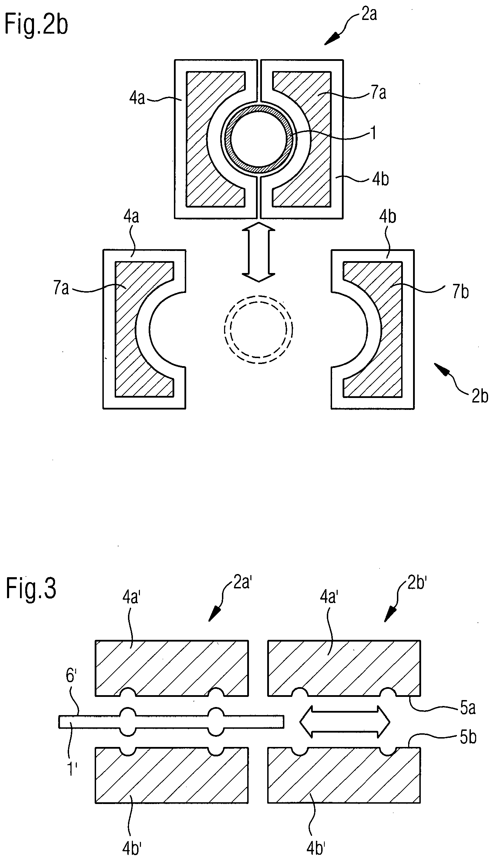

Fig. 2b    die Vorrichtung aus Fig. 1 in einer der Fig. 2a entsprechenden Darstellung, wobei das obere Paar von Temperierbacken um das Formungswerkzeug geschlossen ist;

Fig. 3    eine abgewandelte Ausführungsform der Erfindung mit einem Formwerkzeug wie in Fig. 1 sowie mit zwei Paaren von Temperierbacken zur formkongruenten Aufnahme des Formungswerkzeugs, wobei jedoch im Gegensatz zu Fig. 2a die zwei Paare von Temperierbacken nicht übereinander angeordnet sind, sondern in Bezug auf die Längsachse des Formwerkzeugs hintereinander angeordnet sind, also in axialer Richtung versetzt;

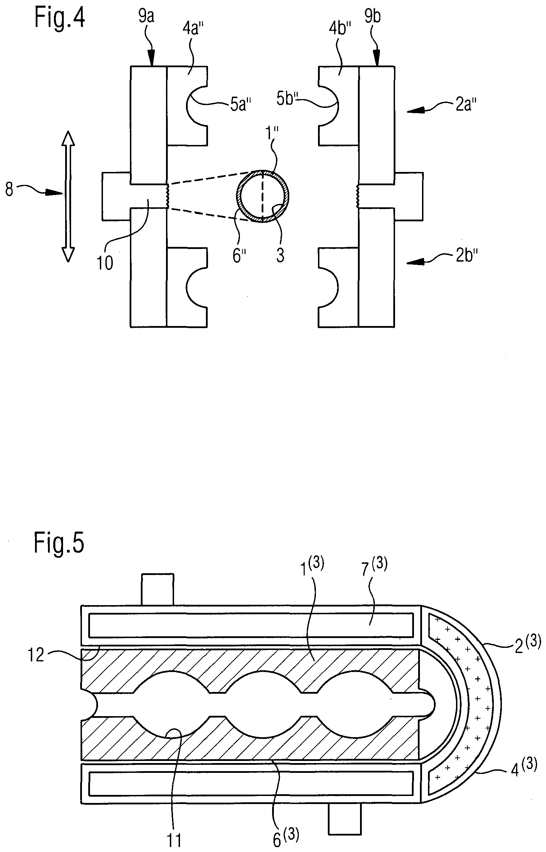

Fig. 4    eine andere Ausführungsform der Erfindung in einer der Fig. 2a entsprechenden Darstellung, wobei nicht wie dort das Formwerkzeug in vertikaler Richtung verfahren wird, sondern stattdessen die halbschalenartigen Temperierelemente gemeinsam verfahren werden können, und wobei zwischen einem oberen Paar von Temperierelementen für eine erste Temperatur und einem unteren Paar von Temperierelementen für eine zweite Temperatur noch die Möglichkeit der Erfassung der Temperatur an der Außenseite des Formwerkzeugs vorgesehen ist, insbesondere durch optische Ablesung;

Fig. 5    eine wiederum abgewandelte Ausführungsform der Erfindung, wobei das Formungswerkzeug keine konstante Wandungsstärke aufweist, sondern derart gestaltet ist, dass seine Außenseite einen profilartig konstanten Querschnitt entlang seiner Längsrichtung aufweist, insbesondere einen halb- oder teilzylindrischen Querschnitt, woran die Innenseiten der halbschalenartigen Temperierelemente durch eine entsprechende hohlprofilartige oder hohlzylindrische Gestalt angepasst sind;

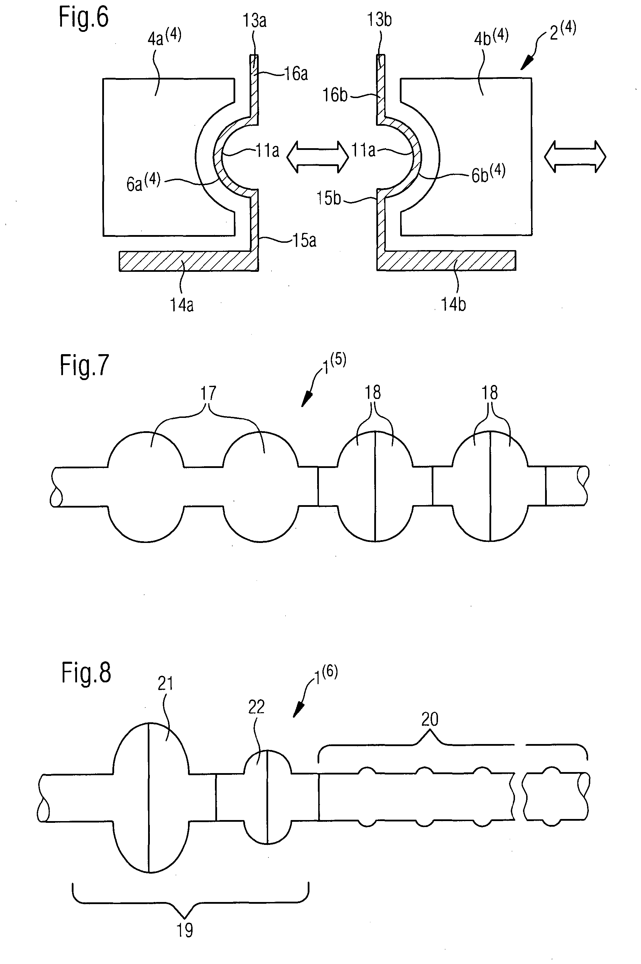

Fig. 6    eine abermals abgewandelte Ausführungform der Erfindung in einem Schnitt quer zur Längsrichtung des Formwerkzeugs, welches entlang seiner Längsrichtung unterteilt ist in zwei Halbschalen mit jeweils winkelprofilartigem Aufbau, welche geöffnet werden können, um den Schlauchrohling einzulegen oder den fertigen Schlauchformling auszuwerfen;

Fig. 7    ein Formwerkzeug in einer Seitenansicht, wobei mehrere Hohlformen für jeweils ein Produkt in einer gemeinsamen Längsrichtung hintereinander angeordnet sind, so dass mit einer oder mehreren, jeweils alle diese Hohlformen gemeinsam umschließenden Temperiereinrichtung(en) eine entsprechende Vielzahl von Schlauchformlingen gleichzeitig hergestellt werden können; sowie

Fig. 8    ein beispielhaftes Formwerkzeug für die Umformung eines Rohschlauches zu einem kombinierten ballon- und schlauchartigen Körper.

Fig. 1 zeigt beispielhaft ein als rohrartiger, zylindrischer Körper gestaltetes Formungswerkzeug 1, welches im funktionellen Verbund mit wenigstens einem Temperierelement 2 die allseitige Temperierung und Umformung eines Schlauchrohlings 3 aus beispielsweise elastischem Polyurethanmaterial erlaubt.

Das Formwerkzeug 1 weist zur Aufnahme des zu formenden Schlauchrohlings 3 einen innern, langgestreckten Hohlraum auf, der an beiden Enden vorzugsweise offen ist. Die dort austretenden Enden eines eingelegten Schlauchrohlings 3 können in je einer Fixier- und/oder Spanneinrichtung verankert sein, beispielsweise durch Klemmung mittels einer Klemmeinrichtung wie Klemmbacken festgehalten. Die beiden, endseitigen Spanneinrichtungen können relativ zueinander verfahrbar sein, insbesondere in Längsrichtung des Schlauchrohlings 3 voneinander entfernbar, um diesen in seiner Längsrichtung zu straffen. Ferner kann wenigstens eine derartige Fixier-, Klemm- oder Spanneinrichtung mit einem innerhalb eines eingespannten Schlauchrohlings 3 mündenden Kanal versehen sein, durch welchen der Fülldruck innerhalb des Schlauchrohlings 3 variiert bzw. eingestellt werden kann. So kann der Druck zur Durchführung des Blasformvorganges vorübergehend angehoben werden, damit um den Schlauchrohling 3 radial aufzuweiten und von innen gegen die Hohlform des Formungswerkzeugs 1 anzulegen oder gar anzupressen. Zur Entnahme des fertig ausgeformten Schlauchformlings 3 kann der Innendruck sodann abgesaugt werden.

Der Hohlraum des Formwerkzeugs 1 weist - sozusagen als Negativ-Form - bereits die bei der Umformung angestrebte Gestalt des fertigen Schlauchformlings 3 auf. Bevorzugt hat das Formwerkzeug 1 eine sehr dünne Wandstärke, die zumindest bereichsweise konstant sein kann. Bevorzugt haben sich Wandstärken von 5 mm oder weniger, beispielsweise von 3 mm oder weniger, vorzugsweise von 2 mm oder weniger, insbesondere von 1 mm oder weniger. Sofern das verwendete Material stabil genug ist, kann die Wandstärke des Formwerkzeuges 1 weiter reduziert werden, beispielsweise auf eine Wandungsstärke im Bereich von 0,3 bis 0,5 mm.

Das Formwerkzeug 1 besteht vorzugsweise aus einem Material mit einer guten Wärmeleitfähigkeit, insbesondere aus Metall. Dabei kommen Materialien wie Eisen, Stahl, Edelstahl oder Messing in Betracht, weil jene stabil und preiswert sind. Bessere Wärmeleitfähigkeiten erzielt man jedoch mit Metallen wie Aluminium, Kupfer oder insbesondere Silber, wobei allerdings auch die Stabilität geringer ist.

Sofern die Gestalt des Formwerkzeugs 1 von einer reinen Zylinderform abweicht, ist dieses selbst zunächst durch (Um-) Formung herzustellen, beispielsweise durch hydraulisches Umformen.

Das Temperierelement 2 ist in Längsrichtung in zwei Halbschalen 4a und 4b - ggf. auch in eine größere Anzahl von Teilschalen - unterteilt, deren einander zugewandte Innenseiten 5a, 5b allseitig formschlüssig bzw. formkongruent an die Oberfläche 6 des Formungswerkzeuges 1 herangefahren werden und so einen effizienten Wärmeaustausch mit dem Formungswerkzeug 1 ermöglichen.

Die Halb- der Teilschalen 4a, 4b der Temperierelemente 2 sind vorzugsweise massereich gestaltet, also keineswegs dünn ausgebildet wie das Formwerkzeug 1, sondern weisen vorzugsweise jeweils wenigstens einen inneren Hohlraum 7a, 7b auf, der beständig von einem flüssigen Temperierungsmedium M mit konstant gehaltener Temperatur durchspült wird, so dass auch die gesamten Halb- oder Teilschalen 4a, 4b und insbesondere deren dem Formwerkzeug 1 zugewandte Innenseiten 5a, 5b auf konstanten Temperaturen gehalten werden.

Bei einer konstant geregelten Mediumtemperatur $T_M$, die der an den Formungsflächen angestrebten Formungstemperatur $T_F$ entspricht bzw. von dieser nur gering abweicht, wird aufgrund der dünnen Wandstärke des Formwerkzeugs 1 beim Anlegen eines Paars oder Satzes von Temperier-Halb- oder -Teilschalen 4a, 4b an die Außenseite 6 des Formungswerkzeuges 1 - wie dies in Fig. 2b zu sehen ist - nicht nur das Formungswerkzeug 1 selbst nahezu augenblicklich auf das neue Temperaturniveau erwärmt; darüber hinaus wird auch das innerhalb von wenigen Sekunden eine Durchwärmung des Schlauchrohlings 3 erreicht, beispielsweise innerhalb von 10 Sekunden oder weniger, vorzugsweise innerhalb von 6 Sekunden oder weniger; insbesondere innerhalb von 4 Sekunden oder weniger.

Natürlich ist die Beheizung des Formwerkzeugs nicht auf die Verwendung eines Temperierungsmediums eingeschränkt, sondern kann beispielsweise auch auf elektrischem Wege erfolgen, z.B. mittels eines elektrischen Heizelements wie einer Heizwicklung.

Wie man den Fig. 2a, 2b weiter entnehmen kann, gibt es vorzugsweise mehrere Temperierelemente 2 bzw. Paare oder Sätze von Halb- oder Teilschalen 4a, 4b.

Dabei werden diejenigen Halb- oder Teilschalen 4a, 4b, welche sich beim Zusammenfahren (wie in Fig. 2b anhand des oberen Temperierungselements 2a dargestellt) zu einem einzigen, das Formwerkzeug 1 umschließenden Temperierelement 2a, 2b aneinanderfügen bzw. ergänzen, von dem selben Temperiermedium M durchströmt, welches die selbe Vorlauftemperatur $T_V$ aufweist.

Unterschiedliche Temperiereinrichtungen 2a, 2b bzw. unterschiedliche Paare oder Sätze von Halb- oder Teilschalen 4a, 4b können und sollen im Allgemeinen unterschiedliche Vorlauftemperaturen $T_{V1}$, $T_{V2}$, ... aufweisen, so dass durch selektive Auswahl unterschiedlicher eines Paares oder Satzes von halb- oder Teilschalen 4a, 4b die Temperatur $T_F$ des Formungswerkzeugs 1 auf eine bestimmte von mehreren, verschiedene Temperaturen $T_{V1}$, $T_{V2}$, ... eingestellt werden kann. Hierzu sind überhaupt keine strömungstechnischen Umschaltungen erforderlich; die Zirkulation des Kühl- oder Heizmeidums M wird dadurch nicht beeinflusst; vielmehr erfolgt diese Temperatur-Umstellung auf rein mechanischem Weg.

Die Fig. 2a, 2b zeigen, dass dazu das Formungswerkzeug 1 und/oder die Temperierungselemente 2a, 2b relativ zueinander in der Vertikalen verfahren werden können. Hier sind die jeweils temperaturkonstant regulierten Temperierungselemente 2a, 2b bzw. deren Paare oder Sätze von Halb- oder Teilschalen 4a, 4b vertikal üereinander angeordnet. In der Fig. 2b befindet sich das Formungwerkzeug 1 in der oberen Position, und die beiden Halb- oder Teilschalen 4a, 4b des oberen Temperierungselements 2a sind zusammengeschoben und formschlüssig über dem Formungswerkzeug 1 geschlossen. Das Temperierungselement 2a wird mit einem heißen flüssigen Medium M der Temperatur $T_1$ durchspült und teilt diese Temperatur dem Formungswerkzeug 1 mit.

Zum Wechsel des Temperierungsniveaus öffnen sich die Temperierungsbacken 4a und 4b des Temperierungselements 2a, wie in Fig. 2a dargestellt, und sodann wird das Formungswerkzeug 1 auf die andere bzw. in diesem Falle auf die untere Etage des dortigen Temperierelements 2b verschoben bzw. in diesem Falle abgesenkt, dessen Halb- oder Teilschalen 4a und 4b dabei zunächst ebenfalls geöffnet sind. Sobald sich das Formungswerkzeug 1 auf der neuen bzw. in diesem Falle unteren Position befindet, können sich schließlich die Halb- oder Teilschalen 4a, 4b des dortigen Temperierelements 2b um das Werkzeug 1 schließen, dessen Temperierungsbacken 4a und 4b werden von einem Medium M mit einer anderen, beispielsweise tieferen Vorlauftemperatur $T_{V2}$, beispielsweise um das Formungswerkzeug 1 zu kühlen..

Fig. 3 zeigt eine andere Anordnung von Formungswerkzeug 1' und Temperierungselementen 2a', 2b', wobei das Werkzeug 1' und die Temperierungselemente 2a'. 2b' relativ zueinander in der Horizontalen verfahren werden können. Hier sind die jeweils auf konstanten, jedoch unterschiedlichen Temperaturen $T_{V1}$, $T_{V2}$ gehaltenen Temperierungselemente 2a', 2b' sequentiell hintereinander angeordnet, so dass das Formungswerkzeug 1' in seiner Längsrichtung verschoben werden kann, wenn die Halb- oder Teilschalen 4a' und 4b' der beiden Temperierungselemente 2a', 2b' auseinander gefahren sind. Befindet sich das Formungswerkzeug 1' dann an der gewünschten Position innerhalb desjenigen Temperierungselementes 2a', 2b' mit der gewünschten Temperatur $T_{V1}$, $T_{V2}$, schließen sich die dortigen Halb- oder Teilschalen 4a', 4b' formschlüssig über dem zu temperierenden Formungswerkzeug 1'.

Auch bei der Fig. 3 ist das Formungswerkzeug 1' vorzugsweise rohrartig konzipiert, d.h., mit einer etwa konstanten Wandstärke. Mit anderen Worten, zwischen der Innenfläche der Hohlform und der Außenfläche 6 des Formungswerkzeugs 1' gibt es eine Kontursymmetrie, so dass der Wärmedurchgangswiderstand im Idealfall an jeder Stelle gleich groß ist. Aufgrund "der Kontursymmetrie von Innen- und Außenfläche 6' des ForFormwerkzeugs 1' müssen auch die Kontaktflächen 5a', 5b' der Temperierungselemente 2a', 2b' entsprechend formkongruent zur Außenfläche 6' des Formungswerkzeuges 1' konstruiert sein, so dass sie sich im geschlossenen Zustand jener Außenfläche 6' mit einem kleinstmöglichen oder vernachlässigbaren Spalt anfügen können. Das Werkzeug 1' muss wie auch bei der weiter oben beschriebenen Ausführungsform 1 dabei nicht unteilbar ausgeführt sein, sondern kann öffenbar sein, um einen Schlauchrohling einlegen oder einen fertigen Schlauchformling entnehmen zu können..

Fig. 4 zeigt eine Vorrichtung 8 zum gemeinsamen vertikalen Verfahren der Temperierungselemente 2a", 2b". Diese umfasst zwei jochartige Rahmen 9a, 9b, von denen jeder jeweils zwei Halb- oder Teilschalen 4a", 4b" unterschiedlicher Temperierungselemente 2a", 2b" miteinander verbindet.

Diese Rahmen 9a, 9b können in horizontaler Richtung gegeneinander verfahrbar an einem weiteren, in Fig. 4 nicht dargestellten Rahmen geführt sein, der seinerseits mit einem gemeinsamen vertikalen Antrieb und/oder mit wenigstens einer gemeinsamen vertikalen Verschiebeführung versehen sein kann. Nachdem durch eine Vertikalverstellung dieses gemeinsamen Rahmen das gewünschte Temperierungselement 2a", 2b" ausgewählt und auf die Höhe des Formungswerkzeugs 1" eingestellt wurde, werden dessen Halb- oder Teilschalen 4a", 4b" in horizontaler Richtung zusammengefahren und schließlich um das Formwerkzeug 1" geschlossen.

Damit ist die Anordnung gemäß Fig. 4 funktionell etwa analog zu der nach Fig. 2a, jedoch um eine Vorrichtung 10 ergänzt, welche als Zwischenschritt zwischen der Öffnung des einen Temperierungsbackensystems 2a" und dem Schluss eines anderen Backensystems 2b" über dem Werkzeug 1" die optische Ablesung der Temperatur T auf der Werkzeugaußenfläche 6" erlaubt. Die Vorrichtung 10 ist, wie in Fig. 4 abgebildet, an einem Rahmen 9a angeordnet, vorzugsweise zwischen zwei vertikal verfahrenden, sich jeweils öffnenden und schließenden Backensystemen 2a", 2b".

Das Formungswerkzeug 1" soll zur bestmöglichen Gewährung der indirekten Ablesbarkeit der wirksamen Formungstemperatur an der Formaußenfläche 6" zumindest in dem formenden Bereich einen möglichst kontursymmetrischen Aufbau der Formwandung haben, um dadurch eine bestmögliche Spiegelung zwischen der auf den Schlauchrohling 3 wirkenden Formungstemperatur T an der Innenseite des Hohlraums innerhalb des Formungskwerkzeugs 1" und der auf dessen Formaußenfläche 6" herrschenden Temperatur zu gewährleisten. Dies ist bei einer überall gleichen, möglichst geringen Wandstärke mit guter Näherung erfüllt, insbesondere bei einer Wandstärke von überall nicht mehr als 1 mm. Die Kontursymmetrie wird im Allgemeinen nicht durch eine Unterteilung des Formwerkzeugs 1" beeinträchtigt.

Bei der Messvorrichtung 10 handelt es sich um einen auf die Außenfläche 6" des Formungswerkzeugs 1" fokussierten Thermosensor, insbesondere auf der Basis der von dem Formungswerkzeug 1" abgegebenen Infrarotstrahlung.

Es kann sich bei dem Sensor 10 natürlich auch um eine IR-Kamera zur Aufnahme flächiger IR-Bilder handeln, womit sodann insbesondere auch die Gleichförmigkeit der Temperaturverteilung über die gesamte Formaußenfläche 6" verifiziert werden kann.

Das beschriebene, indirekte Monitoring der Formungtemperatur zu definierten Zeitpunkten im Zyklusverlauf liefert einen entscheidenden Beitrag zur Validierbarkeit des Prozesses. Aber selbst wenn das Formungswerkzeug keine zur näherungsweisen Ablesbarkeit der auf der Formungsoberfläche wirksamen Formungstemperatur geeignete Kontursymmetrie aufweist, kann das Ablesungsergebnis zu einem bestimmten Zykluszeitpunkt zur Sicherung der Prozessvalidierung beitragen, indem die Abweichung von einer Referenzmessung bewertet wird.

Fig. 5 zeigt eine Halbschale 4(3) eines Temperierelements 2(3) sowie einen Schnitt durch ein davon umschlossenes Formungswerkzeug 1(3) und stellt vor allem insofern eine Abweichung gegenüber der in Fig. 1 gezeigten Anordnung dar, als das Formungswerkzeug 1(3) keine Kontursymmetrie aufweist. Vielmehr ist zwar in der Innenseite 11 des Formungswerkzeugs 1(3) die Negativ-Form eines oder mehrerere auszuformender Schlauchförmige eingearbeitet; diese Negativ-Form ist jedoch in der Kontur der Außenseite 6(3) des Formungswerkzeugs 1(3) nicht erkennbar. Vielmehr weist die äußere Oberfläche 6(3) des Formungswerkzeugs 1(3) die Gestalt eines Profils auf, vorzugsweise die Gestalt eines einfachen Zylinders, insbesondere eines Kreisylinders. Das Formwerkzeug 1(3) erscheint von außen daher stangenartig zylindrisch. Natürlich kann das Formwerkzeug 1(3) auch aus mehrereren, seriell hintereinander angeordneten Einzelformen bzw. Formsegmenten bestehen. Grundsätzlich können derartige, nicht kontursymmetrisch zum Werkstück ausgelegte Formwerkzeuge 1(3) auch teilbar oder längsteilbar aufgebaut sein.

Das sich über dem Formungswerkzeug schließende Temperierungselement 2(3) besteht aus zwei jeweils nach lateral vom Werkzeug weg verfahrbaren Halbschalen 4a(3), 4b(3), die das zylindrische Werkzeug 1(3) im geschlossenen Zustand formschlüssig aufnehmen. Der große Vorteil besteht darin, dass die Temperierungselemente 2(3) an ihrer Innenseite 12 an die profilartige oder zylindrische Gestalt der Außenseite 6(3) angepasst ist, also hohl-profilförmig oder hohl-zylindrisch, und daher bei einer Änderung des Formwerkzeugs 1(3) keiner Anpassung bedürfen, wenn andere Formwerkzeuge 1(3) die selbe, profilartige oder zylindrische Gestalt aufweisen und daher unmittelbar in die Forminnenfläche 12 hinein passen. Daher dürfte eine solche Ausgestaltung für Kleinserien interessant sein, wo öfter ein Wechsel des Formwerkzeugs 1(3) erforderlich ist. Allerdings erfordert diese vereinfachte Form der Werkzeugauslegung zur gleichmäßigen Durchwärmung infolge der ungleichmäßigen Masseverteilung im Allgemeinen längere Temperierungszyklen.

Fig. 6 zeigt eine Ausführungsform eines winkelartig aufgebauten Formungswerkzeugs 1(4), welches aus zwei Halbschalenelementen 13a und 13b besteht, das in besonderer Weise für die Montage auf einer Öffnungs- und Verschlussmechanik konzipiert ist. Die jeweilige Halbschale 13a, 13b ist mit je einem vorzugsweise bodenseitigen Montageschenkel 14a, 14b ausgestattet, der die einfache Montage auf der Verschlussmechanik erlaubt und einen kraftvollen, spaltfreien Schluss der nach oben weisenden Schenkel 15a, 15b, welche die Formungskavitäten 11a, 11b integrieren, gewährleistet. Zwei über diese Formungskavitäten 11a, 11b hinaus ragende Laschen 16a, 16b stellen sicher, dass die Formhälften 13a, 13b sich stets lückenlos schließen.

Der beschriebene Winkelaufbau erlaubt einen besonders masseleichten Formaufbau, wobei Wandungsstärken im Bereich der formenden Flächen 11a, 11b von 0,2 mm bis 2,5 mm erlaubt, vorzugsweise von 0,5 mm bis 1,5 mm erreichbar sind. Der besondere winkelige Aufbau erlaubt ferner die Konstruktion besonders langer Formungswerkzeuge mit vielen seriell angeordneten Einzelkavitäten und deren präzise Führung in einer sich über viele Zyklen öffnenden und verschließenden Mechanik. Zur Temperierung der winkeligen Halbschalen 13a, 13b werden die formkongruenten Temperierungselemente 4a(4) oder 4b(4) an die außenliegenden Rückseiten der Halbschalen 13a, 13b kraftvoll angepresst, so dass die beiden Laschen 16a, 16b mit entsprechenden Kräften gegeneinander gepresst werden.

Fig. 7 zeigt eine besondere Formgebung eines erfindungsgemäßen Formungsrohres 1(5), welches die Ausformung langer Ketten von ballonartigen Elementen aus einem Schlauchrohling 3 ermöglicht, und kommt beispielsweise bei der Herstellung medizinischer Katheter zum Einsatz. Die Formgebung kann dabei herkömmliche sphärische und zylindrische Figuren umfassen, jedoch auch bis zu asymmetrischen, komplexen Formen reichen.

Die Herstellung eines solchen erfindungsgemäßen Formungsrohres 1(5) kann dabei aus einem zunächst zylindrischen Rohrkörper durch hydraulisches Umformen, Pressen oder Tiefziehen erfolgen; man erhält solchenfalls ohne weiteres einen längeren, einstücken Abschnitt 17 eines Formungsrohres 1(5), wie er in Fig. 7 links dargestellt ist. Das Verhältnis des größten Ballondurchmessers zum Ballonschaftdurchmesser begrenzt dabei jedoch die Anwendbarkeit der Formgebung des Formungsrohres durch hydraulische Formung bzw. durch Pressen oder Tiefziehen. In der Regel sollten daher Durchmesserverhältnisse von 2,5 : 1 bis 3 : 1 möglichst nicht überschritten werden.

Bei höheren Durchmesserverhältnissen können gedrehte oder gefräste Formwerkzeugelemente 18 verwendet werden, wie sie in Fig. 7 rechts zu sehen sind. Mehrere solcher Formungswerkzeugelemente 18 können zu einer durchgehenden, stabilen Formrohrstruktur verbunden werden, beispielsweise verschweißt, verlötet oder verklebt.

Fig. 8 zeigt eine weitere spezifische Formgebung eines erfindungsgemäßen Formungsrohres 1[(6)], welches die Ausformung von Folien-Grundkörpern für den Aufbau von stuhlableitenden Drainagekathetern ermöglicht, wie diese beispielsweise in WO 2009/144028 beschrieben werden. Die Formgebung umfasst hier sowohl einen den Kopfteil des Drainagekatheters ausbildenden Formanteil 19, welcher gegenüber dem schlauchartig ausgelegten drainierenden Schlauchsegment 20 eine oder mehrere sphärische Erweiterungen 21, 22 aufweist und den Drainagekörper im Patientenrektum verankert. Die erfindungsgemäße Formung mit massereduzierten, zum Werkstück kontursymmetrischen Formungswerkzeugen und sich daran passgenau schmiegenden, konstant temperierten Heiz- und Kühlbacken bietet hier einen erheblichen Zykluszeitvorteil, da große Werkzeugmassen, wie sie zum Beispiel bei der Formung von Werkstücken mit großen Kalibersprüngen des Durchmessers bei konventionellem Werkzeugaufbau die Regel sind, vermieden werden können.

Alternativ zu halbschalenartigen, massereichen Temperierelementen 2 aus Metall oder festem nichtmetallischem, wärmeleitfähigem Material kann deren Aufbau auch auf mit kissenartig gestalteten, vorzugsweise mit Flüssigkeit befüllten Elementen aus beispielsweise Silikon basieren, die sich ohne besondere Formkongruenz dem äußeren Profil des Formungswerkzeuges ausreichend gut formschlüssig anschmiegen können.

Als Basismaterial für einen Schlauchkörper 3 zur Herstellung eines Fahrradschlauches sind beispielsweise äther-basierte Polyurethane der Sorte Elastollan der Firma BASF-Elastogran, Lemförde geeignet. Bevorzugt kommen wegen ihrer reduzierten Luftdurchlässigkeit jedoch Ester-basierte Grundstoffe der Elastollan Reihe 600 im Shore-Härtenbereich von etwa 80A bis 90A zur Verwendung. Während der Schlauchrohling 3 beispielhaft einen Durchmesser von 16 bis 17 mm bei einer Ausgangswandstärke von ca. 0,30 bis 0,35 mm aufweisen kann, stellt sich im erfindungsgemäß umgeformten Schlauchformling ein Durchmesser von ca. 25 mm win, bei einer Wandstärke von ca. 0,2 bis 0,25 mm. Derartig, zum Beispiel aus Material der Sorte Elastollan 685A zum Fahrradschlauch ausgeformt, weist der Schlauchformling 3 eine den spezifischen Anforderungen der Anwendung entsprechende, laufmechanisch vorteilhafte, gummiartige Dehnbarkeit auf. Bei Beaufschlagung mit üblichen Schlauch-Fülldrucken dehnt sich der so gefertigte Schlauchkörper bereits bei Werten von 1 bar in guter Passung in den Radmantel hinein.

Für die Formung der Schlauch- und Ballonkomponenten von Stuhldrainagen kann beispielsweise ein ätherbasiertes Polyurethan der Sorte Elastollan der Reihe 1100 im Shore-Härtenbereich von etwa 80A bis 95A zur Verwendung. Diese Materialdurometer erlauben sowohl die Ausformung der produkttypischen Kopfeinheit, welche die Vorrichtung im Rektum verankert und dichtet, als auch die Formung einer abführenden Schlauchsektion, mit den jeweils für die Funktion erforderlichen Stabilitäts- und Verformbarkeitscharakteristika. Bei einem Rohschlauchdurchmesser, der nahe am Durchmesser des extrakorporalen, stuhlableitenden Schlauchsegmentes liegt, kann bei der Formung des intrakorporalen, sphärisch erweiterten Anteils auf eine axiale Streckung des Rohlings weitgehend verzichtet werden, und der sphärische Anteil lediglich durch die radiale Expansion des Rohschlauchs in die entsprechende Kavität hinein erzeugt werden.

Alternativ zu Polyurethan, können auch andere Polymere mit vorzugsweise zu PUR vergleichbaren dehnungs- und formungselastischen Eigenschaften verwendet werden.

Eine erfindungsgemäße thermische Umformung ist ebenfalls bei nicht PUR-typisch elastischen Materialien denkbar, wie beispielsweise Pebax, Polyamid oder PET. Bei diesen Materialien, die für das optimal reproduzierbare Blasen eine besonders homogene Vortemperierung des Rohschlauches benötigen, kann das längsgeteilte Formungswerkzeug, analog wie in WO 2013/041234 beschrieben, mit einer nutartigen, passgenauen Fräsung zur Aufnahme des noch nicht verformten Rohlings versehen werden.

Bei erreichter Durchwärmung öffnen sich die Formhälften und verfahren um einen gewissen Betrag vertikal über dem erwärmten Schlauch und schließen diesen, durch erneuten Schluss der Halbschalen, in die eigentliche Formungskavität, in welcher dieser dann zum Ballon verformt wird. Zur Einstellung eines definierten Vorwärmungsniveaus kann der das höher temperierte heizende Temperierelement 2 kurz an die Formungswandung herangefahren werden und im Werkzeug den erforderlichen Energieübertrag auf Vorwärmungsniveau herstellen. Alternativ kann der Vorrichtung ein weiteres Set von backenartigen Temperierelementen hinzugefügt werden, welches fix auf das Vorwärmungsniveau temperiert ist. Dies sowohl in vertikaler als auch in horizontaler Anordnung der Temperierungselemente.

Alternativ zum hier beschriebenen Verfahren der Umformung von Schlauchmaterial, welches in einem separaten Herstellungsprozess erzeugt wird, kann der extrudierte Rohschlauch auch im unmittelbaren Anschluss an das Verlassen aus dem Extrusionskopf, im noch heißen, verformbaren Zustand durch eine geeignete, das Extrudat aufnehmende äußere Form bei anlastendem Blasdruck im Lumen der Schlauchmasse ausgeformt werden. Im idealen Fall kann dann auf das heizende Temperierelement verzichtet werden und lediglich das kühlende Element an die Formoberfläche angepresst werden.

Das Verfahren zur Herstellung eines Schlauchelementes mittels thermischer Umformung in einem massearmen, durch beispielsweise Pressung, Prägung, Tiefziehung, Erodierung oder Fräsung hergestellten Formungswerkzeugs wird wie folgt, am Beispiel der in Fig. 4 beschriebenen Vorrichtung mit vertikal verfahrbaren Temperierungs-Backensystemen beschrieben:

A. Einführen des Schlauchrohlinges 3 aus beispielsweise PUR der Sorte Elastollan 1185A in das Formungswerkzeug 1";

B. Stumpfe Klemmung des Schlauches 3 am schlauchzuführenden, materialreserve- bzw. rollenseitigen Ende des auszuformenden Rohlings 3;

C. Klemmung des freien vorderen Endes des Schlauchrohlings 3 über einem Belüftungskonus oder einer entsprechenden Pin-artigen Struktur;

D. Axiale Streckung des Schlauchrohlinges 3 durch axiale Auseinanderbewegung der Schlauchenden;

E. Beaufschlagung des gestreckten Rohlings 3 mit Blasdruck und radiale Ausdehnung des Schlauchrohlings 3 in das Formungsrohr 1";

F. Heranfahren der Halbschalen 4a" und 4b" eines ersten Temperierungselements 2a" an das Formungswerkzeug 1" und formschlüssiges Anpressen an die äußere Oberfläche 6" des Werkzeugs 1", bis eine Temperierung der inneren Formoberfläche auf eine Temperatur von ca. 160 bis 170 °C erreicht ist;

G. Öffnen der Halbschalen 4a" und 4b" des ersten Temperierungselements 2a", vertikales Verfahren des Rahmensystems 9a, 9b, so dass sich die Etage der Halbschalen 4a" und 4b" eines zweiten Temperierelements 2b" auf Höhe des Formwerkzeugs 1" befindet, Heranfahren und passgenauer Schluss von dessen Halbschalen 4a" und 4b" um die Oberfläche des Formungsrohres 1", Kühlung des Formungsohres auf eine Temperatur von ca. 40 °C;

H. Öffnen der Elemente 4a" und 4b", Entnahme des umgeformten Schlauchformlings 3 zum freien, belüftenden Ende hin, simultanes Einziehen des folgenden, noch ungeformten Schlauches in das Formungsrohr von der Materialreserveseite her;

I. Abtrennung des ausgeformten Schlauches 3, vorzugsweise derart, dass die Abtrennung im ausgeformten Bereich erfolgt, und somit ein formdefiniertes, freies Ende zur sichereren bzw. automatisierbaren Einführung des Belüftungspins bzw. dessen automatischen Klemmung erleichtert;

J. Einführen des Belüftungspins in das abgetrennte Schlauchende des auszuformenden Ballons und Klemmung desselben; sodann erneuter Zyklusstart mit axialer Streckung des Schlauches.

Bei einem Formwerkzeug 1$^{(4)}$ mit in Halbschalen 13a, 13b längsgeteiltem Aufbau für optimal materialsparendes Formen, kann das Verfahren die folgende Schrittabfolge aufweisen:

A. Einführen des Schlauchrohlinges 3 aus beispielsweise PUR der Sorte Elastollan 1185A in das geöffnete längsgeteilte Formungswerkzeug 1$^{(4)}$ auf beispielsweise 50% der Gesamtlänge des Werkzeuges 1$^{(4)}$;

B. Stumpfe Klemmung des Schlauches 3 am schlauchzuführenden, materialreserve- bzw. rollenseitigen Ende des auszuformenden Rohlings 3;

C. Heranfahren des Belüftungskonus oder einer entsprechenden Pin-artigen Struktur an das freie vordere Ende des Schlauchrohlings 3, in die geöffnete Form hinein, Klemmung des Schlauchendes 3 über der Pin-Einheit;

D. Axiale Streckung des Schlauchrohlinges 3 durch axiales Auseinanderbewegen der Schlauchenden um einen Mindestbetrag, so dass sich die Halbschalen 13a, 13b über dem gestreckten Schlauch 3 schließen können;

E. Beaufschlagung des gestreckten Rohlings 3 mit Blasdruck und radiale Ausdehnung des Schlauchrohlings 3 in das Formungswerkzeug 1$^{(4)}$ hinein;

F. Heranfahren der Halbschalen 4a$^{(4)}$ und 4b$^{(4)}$ eines ersten Temperierungselements 2a$^{(4)}$ an das Formungswerkzeug 1$^{(4)}$ und formschlüssiges Anpressen an die äußere Oberfläche 6a$^{(4)}$, 6b$^{(4)}$ des Werkzeugs, bis eine Temperierung der inneren Formoberfläche auf eine Temperatur von ca. 160 bis 170 °C erreicht ist;

G. Öffnen der Halbschalen 4a$^{(4)}$ und 4b$^{(4)}$ des ersten Temperierungselements 2a$^{(4)}$, vertikales Verfahren des Formwerkzeugs 1$^{(4)}$ von der Höhe des ersten Temperierelements 2a$^{(4)}$ bis zu einer Höhe, wobei sich die Halbschalen 4a$^{(4)}$ und 4b$^{(4)}$ eines zweiten Temperierelements 2b$^{(4)}$ auf Höhe des Formwerkzeugs 1$^{(4)}$ befinden, Heranfahren und passgenauer Schluss von dessen Halbschalen 4a$^{(4)}$ und 4b$^{(4)}$ um die Oberfläche des Formungsrohres 1$^{(4)}$, Kühlung des Formungsohres 1$^{(4)}$ auf eine Temperatur von ca. 40 °C;

H. Öffnen der Halbschalen 4a$^{(4)}$ und 4b$^{(4)}$ und Öffnen der Halbschalen 13a, 13b des Formwerkzeugs 1$^{(4)}$, Entlastung der axialen Spannung durch Hineinfahren der Pin-seitigen Klemmvorrichtung in die geöffnete Form 1$^{(4)}$;

I. Trennung des geformten Werkstücks 3 vom Rohschlauch 3 durch einen Schneidemechanismus, Abwerfen des Formlings 3 aus der Pin-seitigen Klemmung;

J. Heranfahren der Pin-seitigen Klemmung an den Materialreserve-seitigen Schnittstumpf, Einführen des Pins in den Stumpf, Klemmung des Stumpfes, Öffnen der Klemmung auf der materialzuführenden Seite; sodann erneuter Zyklusstart mit axialer Streckung des Schlauches.

Bezugszeichenliste

| | |
|---|---|
| 1 | Formungswerkzeug |
| 2 | Temperierelement |
| 3 | Schlauchrohling |
| 4 | Halbschale |
| 5 | Innenseite |
| 6 | Oberfläche |
| 7 | Hohlraum |
| 8 | Verfahr-Vorrichtung |
| 9 | Rahmen |
| 10 | Messvorrichtung |
| 11 | Formwerkzeug-Innenseite |
| 12 | Temperierelement-Innenseite |
| 13 | Halbschalenelement |
| 14 | Montageschenkel |
| 15 | Schenkel |
| 16 | Lasche |
| 17 | Formwerkzeugabschnitt |
| 18 | Formwerkzeugelement |
| 19 | Abschnitt |
| 20 | Abschnitt |
| 21 | Erweiterung |
| 22 | Erweiterung |

**Patentansprüche**

1. Verfahren zum thermischen Umformen von Schlauchrohlingen (3) aus vorzugsweise vorextrudiertem, elastischen Rohschlauchmaterial, wobei sich der Schlauchrohling (3) während der Umformung in einem schalenförmigen, ein- oder mehrteiligen Formungswerkzeug (1) mit einer Hohlform befindet, wobei die Innenseite (11) der Hohlform als Negativ der dem Schlauchrohling (3) aufzuprägenden Form entspricht, wobei die zur Umformung erforderliche Temperierung des Formungswerkzeuges (1) durch Temperierungselemente (2) mit sich formschlüssig über dem Werkzeug schließenden Halb- oder Teilschalen (4) erfolgt, deren dem Formungswerkzeug (1) zugewandte Innenseiten (12) kongruent zur Außenseite (6) des Formwerkzeugs (1) ausgebildet sind, während im Formungswerkzeug (1) selbst keinerlei Temperierungseinrichtung integriert ist, insbesondere keinerlei Kanäle oder sonstige Hohlräume zum Zirkulieren eines Temperierungsmediums, und wobei die Temperatur jedes Temperierungselementes (2) im Prozessverlauf konstant gehalten wird, während zur Veränderung der Temperatur des Formungswerkzeug (1) ein anderes Temperierungselement (2) mit einer entsprechenden, konstanten Temperatur an das Formungswerkzeug (1) herangefahren wird.

2. Verfahren nach Anspruch 1, **dadurch gekennzeichnet, dass** das Formungswerkzeug (1) eine kanalartig geschlossene Gestalt aufweist mit einer inneren Hohlform zur Aufnahme des Schlauchrohlings (3).

3. Verfahren nach Anspruch 1 oder 2, **dadurch gekennzeichnet, dass** das Formungswerkzeug (1) entlang seiner Längsrichtung unterteilt ist in zwei oder mehrere Halb- oder Teilschalen (13), welche in radialer Richtung auseinander fahrbar sind, um die Hohlform zu öffnen und einen Schlauchrohling (3) einzulegen und/oder einen ausgeformten Formling (3) auszuwerfen.

4. Verfahren nach einem der Ansprüche 1 bis 3, **dadurch gekennzeichnet, dass** das Formungswerkzeug (1) oder dessen Halb- oder Teilschalen (13) jeweils aus einem flächigen Teil mit einer geringen Wandstärke d ≤ 5 mm bestehen, vorzugsweise d ≤ 2 mm, insbesondere d ≤ 1 mm.

5. Verfahren nach einem der vorhergehenden Ansprüche, **dadurch gekennzeichnet, dass** das Formungswerkzeug (1) oder dessen Halb- oder Teilschalen (13) aus einem Material mit einer hohen Wärmeleitfähigkeit λ besteht, beispielsweise aus einem Material mit einer Wärmeleitfähigkeit λ ≥ 20 W/(m*K), vorzugsweise aus einem Material mit einer Wärmeleitfähigkeit λ ≥ 50 W/(m*K), insbesondere aus einem Material mit einer Wärmeleitfähigkeit λ ≥ 100 W/(m*K).

6. Verfahren nach einem der vorhergehenden Ansprüche, **dadurch gekennzeichnet, dass** das Formungswerkzeug (1) oder dessen Halb- oder Teilschalen (13) aus Metall besteht (-en).

7.  Verfahren nach einem der vorhergehenden Ansprüche, **dadurch gekennzeichnet, dass** das Formungswerkzeug (1) Kontursymmetrie zwischen seiner Innenseite (11) und seiner Außenseite (6) aufweist und demzufolge auch Temperatursymmetrie zwischen diesen Flächen, d.h., dass die Temperatur $T_I$ an seiner Innenfläche (11) von der Temperatur $T_A$ an seiner Außenfläche (6) bei einem Temperatursprung an seiner Außenfläche um $\Delta T$ nach einer kurzen Übergangszeit von weniger als 5 s nur noch um einen Rest ä abweicht:

$$|T_A - T_I| \le \varepsilon,$$

mit $\varepsilon = 0,5 * \Delta T$, beispielsweise $\varepsilon = 0,3 * \Delta T$, vorzugsweise $\varepsilon = 0,2 * \Delta T$, insbesondere $\varepsilon = 0,1 * \Delta T$.

8.  Verfahren nach Anspruch 7, **dadurch gekennzeichnet, dass** durch Erfassung der Temperatur $T_A$ an der Außenseite (6) auf die Temperatur $T_I$ an der Innenseite (11) der Hohlform in dem Formwerkzeug (1) geschlossen werden kann.

9.  Verfahren nach einem der vorhergehenden Ansprüche, **dadurch gekennzeichnet, dass** die Außenseite (6) des Formwerkzeugs (1) rotationssymmetrisch um die Längsachse des Formwerkzeugs (1) ist, insbesondere zylindrisch oder abschnittsweise zylindrisch, so dass die Gestalt der Temperierungselemente (2) bzw. deren Halb- oder Teilschalen (4) unabhängig von der dem Schlauchrohling (3) aufzuprägenden Form ist.

10. Verfahren nach einem der vorhergehenden Ansprüche, **dadurch gekennzeichnet, dass** ein vorzugsweise einstückiges Formwerkzeug (1) aus einem dünnwandigen, metallischen Rohrkörper durch Pressung desselben in eine prägende Außenform hergestellt ist, insbesondere unter hydraulischer Beaufschlagung des Rohrinneren mit Druck.

11. Verfahren nach einem der vorhergehenden Ansprüche, **dadurch gekennzeichnet, dass** ein vorzugsweise geteiltes Formwerkzeug (1) aus einem dünnwandigen Metallrohr oder -blech durch Tiefziehen desselben über eine prägende Form hergestellt ist, insbesondere unter einseitiger, hydraulischer Beaufschlagung mit Druck.

12. Verfahren nach einem der vorhergehenden Ansprüche, **dadurch gekennzeichnet, dass** die Temperierungselemente (2) in massereicher Bauweise ausgebildet sind, deren Temperatur im Prozessverlauf vorzugsweise durch Perfusion eines flüssigen Mediums (M) durch einen oder mehrere, integrierte Hohlräume (7) konstant gehalten wird.

13. Verfahren nach einem der vorhergehenden Ansprüche, **dadurch gekennzeichnet, dass** die Temperierungselemente (2) als längsteilbare Halb- oder Teilschalen (4) ausgebildet sind, deren Innenseite als Negativ der Außenseite des Formwerkzeugs entspricht

14. Verfahren nach einem der vorhergehenden Ansprüche, **dadurch gekennzeichnet, dass** die sich öffnenden und schließenden Halb- oder Teilschalen (4) der Temperierungselemente (2) von außen an das Formwerkzeug (1) heran gefahren werden, also in radialer Richtung bezogen auf das Zentrum des Formwerkzeugs (1).

15. Verfahren nach einem der vorhergehenden Ansprüche, **dadurch gekennzeichnet, dass** zum Wechsel der Formungstemperatur Formungswerkzeug (1) und Temperierungselemente (2) relativ zueinander verschoben werden, beispielsweise in vertikaler und/oder horizontaler Richtung.

16. Verfahren nach einem der vorhergehenden Ansprüche, **dadurch gekennzeichnet, dass** mehrere Temperierungselemente (2a,2b) für eine synchrone oder gemeinsame Bewegung miteinander und/oder mit einem gemeinsamen Rahmen und/oder mit einer gemeinsamen Antriebseinrichtung verbunden oder gekoppelt sind, insbesondere für eine gemeinsame Bewegung in Längsrichtung des Formungswerkzeugs (1).

17. Vorrichtung zum thermischen Umformen von Schlauchrohlingen (3) aus vorzugsweise vorextrudiertem, elastischen Rohschlauchmaterial, umfassend ein schalenförmiges, ein- oder mehrteiliges Formungswerkzeug (1) mit einer Hohlform zur Aufnahme wenigstens eines Schlauchrohlings (3) während dessen Umformung, wobei die Innenseite (11) der Hohlform als Negativ der dem Schlauchrohling (3) aufzuprägenden Form entspricht, wobei das Formungswerkzeug (1) frei von inneren Kanälen und sonstigen Hohlräumen für das Zirkulieren eines Temperierungsmediums ist, während zur Temperierung des Formungswerkzeuges (1) davon getrennte Temperierungselemente (2) mit sich formschlüssig über dem Werkzeug schließenden Halb- oder Teilschalen (4) vorgesehen sind, deren dem Formungswerkzeug (1) zugewandte Innenseiten (12) kongruent zur Außenseite (6) des Formwerkzeugs (1) ausgebildet sind, und welche eine Einrichtung aufweisen, um die Temperatur jedes Temperierungselementes (2) im Prozessverlauf konstant zu halten, insbesondere innere Hohlräume zur Perfusion eines Temperiermediums (M), und wobei die Vorrichtung **dadurch gekennzeichnet ist, dass** wenigstens eine Mechanik vorgesehen ist, um wahlweise verschiedene Temperierelemente (2) mit unterschiedlichen Temperaturen um das Formungswerkzeug (1) zu schließen.

**Claims**

1. Method for the thermal reshaping of hose blanks (3) consisting of preferably pre-extruded elastic raw hose material, wherein the hose blank (3) is located in a shell-like, single- or multi-part molding tool (1) during the reshaping, wherein the inner side (11) of the hollow mold corresponds as a negative to the shape that is to be impressed upon the hose blank (3), wherein the tempering of the molding tool (1) that is necessary for reshaping occurs by means of tempering elements (2) with half or partial shells (4) which close form-fittingly over the mold, and the inner sides (12) of said shells (4) that face the molding tool (1) are congruent with the outer side (6) of said molding tool (1), whereas no tempering device at all is integrated into the molding tool (1) itself, in particular no ducts or other hollow spaces for circulating a tempering medium, and wherein the temperature of each tempering element (2) is kept constant during the process, while, to modify the temperature of the molding tool (1), a different tempering element (2) with a correspondingly constant temperature is positioned against the molding tool (1).

2. Method according to claim 1, **characterized in that** the molding tool (1) has a channel-like closed form with an inner hollow space for receiving the hose blank (3).

3. Method according to claim 1 **characterized in that** the molding tool (1) is divided along its longitudinal direction into two or more half or partial shells (13) which can be displaced away from each other in the radial direction in order to open the hollow mold and insert a hose blank (3) and/or eject a finished molding (3).

4. Method according claim 1, **characterized in that** the molding tool (1) or its half or partial shells (13) each consists of a flat part with a thin wall thickness $d \leq 5$ mm, preferably $d \leq 2$ mm, in particular $d \leq 1$ mm.

5. Method according to claim 1 **characterized in that** the molding tool (1) or its half or partial shells (13) consist of a material with high thermal conductivity $\lambda$, for example a material with thermal conductivity of $\lambda \geq 20$ W/(m*K), preferably a material with thermal conductivity of $\lambda \geq 50$ W/(m*K), in particular with thermal conductivity of $\lambda \geq 100$ W/(m*K).

6. Method according to claim 1 **characterized in that** the molding tool (1) or its half or partial shells (13) consist(s) of metal.

7. Method according to claim 1 **characterized in that** the molding tool (1) is symmetrical in contour between its inner side (11) and its outer side (6) and accordingly is also symmetrical in temperature between these surfaces, i.e. when there is a jump in temperature by AT on its outer side, the temperature $T_I$ on its inner side (11) deviates from the temperature $T_A$ on its outer side (6) only by a residual a after a brief transitional period of less than 5 s:

$$|T_A - T_I| \leq \varepsilon,$$

where $\varepsilon = 0.5 * \Delta T$, for example $\varepsilon = 0.3 * \Delta T$, preferably $\varepsilon = 0.2 * \Delta T$, in particular $\varepsilon = 0.1 * \Delta T$.

8. Method according to claim 7, **characterized in that** the temperature $T_I$ on the inner side (11) of the hollow mold in the molding tool (1) can be inferred by recording the temperature $T_A$ on the outer side (6).

9. Method according to claim 1 **characterized in that** the outer side (6) of the molding tool (1) is rotationally symmetrical around the longitudinal axis of the molding tool (1), in particular cylindrically or partly cylindrically, so that the shape of the tempering elements (2) and/or their half or partial shells (4) is not dependent upon the shape that is to be impressed upon the hose blank (3).

10. Method according to claim 1 **characterized in that** a preferably one-piece molding tool (1) consisting of a thin-walled metallic tube body is produced by compressing said tube body into a shaping outer mold, especially while applying hydraulic pressure to the interior of the tube.

11. Method according to claim 1 **characterized in that** a preferably divided molding tool (1) consisting of a thin-walled metallic tube or sheet is produced by deep-drawing said tube over a shaping mold, especially while applying hydraulic pressure to one side.

12. Method according to claim 1 **characterized in that** the tempering elements (2) are configured with a high-mass design, the temperature of which is kept constant during the process preferably by the perfusion of a fluid medium (M) through one or more integrated hollow spaces (7).

13. Method according to claim 1 **characterized in that** the tempering elements (2) are configured as longitudinally divisible half or partial shells (4), the inner sides of which corresponds as a negative to the outer side of the molding tool.

14. Method according to claim 1 **characterized in that** the opening and closing half or partial shells (4) of the tempering elements (2) are positioned against the molding tool (1) from outside, i.e. in the radial direction with respect to the center of the molding tool (1).

15. Method according to claim 1 **characterized in that** the molding tool (1) and the tempering elements (2) are displaced relative to each other, e.g. in the vertical and/or horizontal direction, in order to change the molding temperature.

16. Method according to claim 1 **characterized in that** a plurality of tempering elements (2a,2b) are connected or coupled together and/or to a common frame and/or to a common driving mechanism for a synchronous or joint movement, in particular for a joint movement in the longitudinal direction of the molding tool (1).

17. Device for the thermal reshaping of hose blanks (3) consisting preferably of pre-extruded elastic raw hose material, comprising a shell-like, single- or multi-part molding tool (1) with a hollow mold for receiving at least one hose blank (3) while it is being reshaped, wherein the inner side (11) of the hollow mold corresponds as a negative to the shape that is to be impressed upon the hose blank (3), wherein the molding tool (1) is free of internal ducts and other hollow spaces for the circulation of a tempering medium, while half or partial shells (4), which are separate from the mold and which close form-fittingly over the mold, are provided to temper the molding tool (1), wherein the inner sides (12) of said shells which face the molding tool (1) are congruent with the outer side (6) of said molding tool (1) and wherein the shells comprise an arrangement for keeping the temperature of each tempering element (2) constant during the process, in particular internal hollow spaces for the perfusion of a tempering medium (M), and wherein the device is **characterized in that** at least one mechanism is provided for selectively closing different tempering elements (2) at different temperatures around the molding tool (1).

**Revendications**

1. Procédé de formage à chaud d'ébauches de tuyau (3), de préférence à partir d'une matière première flexible pour tuyaux préalablement extrudée, en ce que l'ébauche de tuyau (3) se trouve pendant le formage dans un outil de formage (1) en forme de coque, en une ou plusieurs parties et présentant un moule creux, en ce que la face intérieure (11) du moule creux correspond en négatif à la forme à imprimer à l'ébauche de tuyau (3), en ce que la régulation thermique de l'outil de formage (1) nécessaire au formage est effectuée par des éléments de régulation thermique (2) présentant des demi-coques ou des coques partielles (4) se fermant par complémentarité de forme au-dessus du moule, dont les faces intérieures (12) orientées vers l'outil de formage (1) sont réalisées en congruence avec la face extérieure (6) de l'outil de formage (1), tandis qu'aucun dispositif de régulation thermique n'est intégré dans l'outil de formage (1), en particulier aucun canal ou autre espace creux permettant la circulation d'un fluide de régulation thermique, et en ce que la température de chaque élément de régulation thermique (2) est maintenue constante au cours du processus, tandis que, pour faire varier la température de l'outil de formage (1) un autre élément de régulation thermique (2) présentant une température correspondante constante est approché de l'outil de formage (1).

2. Procédé selon la revendication 1, **caractérisé en ce que** l'outil de formage (1) est de forme fermée de type canal avec un moule creux intérieur destiné au logement de l'ébauche de tuyau (3).

3. Procédé selon la revendication 1 ou 2, **caractérisé en ce que** l'outil de formage (1) est divisé le long de son sens longitudinal en deux ou en plusieurs demi-coques ou coques partielles (13) lesquelles peuvent être écartées en sens radial afin d'ouvrir le moule creux et d'insérer une ébauche de tuyau (3) et/ou d'éjecter une ébauche (3) démoulée.

4. Procédé selon l'une des revendications 1 à 3, **caractérisé en ce que** l'outil de formage (1) ou ses demi-coques ou coques partielles (13) sont constitués respectivement d'une partie plane d'une faible épaisseur de paroi d $\leq$ 5 mm, de préférence d $\leq$ 2 mm, en particulier d $\leq$ 1mm.

5. Procédé selon l'une des revendications précédentes, **caractérisé en ce que** l'outil de formage (1) ou ses demi-coques ou coques partielles (13) sont constitués d'un matériau d'une haute conductivité thermique $\lambda$, par exemple d'un matériau d'une conductivité thermique $\lambda \geq$ 20 W/(m*K), de préférence d'un matériau d'une conductivité thermique $\lambda \geq$ 50 W/(m*K), en particulier d'un matériau d'une conductivité thermique $\lambda \geq$ 100 W/(m*K).

6. Procédé selon l'une des revendications précédentes, **caractérisé en ce que** l'outil de formage (1) ou ses demi-coques ou coques partielles (13) est/sont constitué(es) de métal.

7. Procédé selon l'une des revendications précédentes, **caractérisé en ce que** l'outil de formage (1) présente une symétrie de contour entre sa face intérieure (11) et sa face extérieure (6) et par conséquent également une symétrie de température entre ces surfaces, c'est-à-dire que la température $T_I$ sur sa face intérieure (11) ne diffère de la température $T_A$ sur sa face extérieure (6) que d'une quantité résiduelle a à un saut de température sur sa face extérieure de $\Delta T$ après une courte période de transition inférieure à 5 s :

$$|T_A - T_I| \leq \varepsilon,$$

**en ce que** $\varepsilon = 0,5 * \Delta T$, par exemple $\varepsilon = 0,3 * \Delta T$, de préférence $\varepsilon = 0,2 * \Delta T$, en particulier $\varepsilon = 0,1 * \Delta T$.

8. Procédé selon la revendication 7, **caractérisé en ce que** par saisie de la température $T_A$ sur la face extérieure (6), la température $T_I$ sur la face intérieure (11) du moule creux dans l'outil de formage (1) peut être déduite.

9. Procédé selon l'une des revendications précédentes, **caractérisé en ce que** la face extérieure (6) de l'outil de formage (1) est de symétrie de révolution autour de l'axe longitudinal de l'outil de formage (1), en particulier cylindrique ou partiellement cylindrique de telle sorte que la configuration des éléments de régulation thermique (2) ou de leurs demi-coques ou coques partielles (4) est indépendante de la forme à imprimer à l'ébauche de tuyau (3).

10. Procédé selon l'une des revendications précédentes, **caractérisé en ce qu'**un élément de formage (1) de préférence en une pièce est réalisé à partir d'un corps de tube métallique à paroi mince par pressage de celui-ci en une forme extérieure à imprimer, en particulier sous application d'une pression hydraulique à l'intérieur du tube.

11. Procédé selon l'une des revendications précédentes, **caractérisé en ce qu'**un outil de formage (1) de préférence divisé est réalisé à partir d'un tube ou d'une tôle métallique à paroi mince par formage profond de celui-ci par l'intermédiaire d'une forme à imprimer, en particulier sous application unilatérale d'une pression hydraulique à l'intérieur du tube.

12. Procédé selon l'une des revendications précédentes, **caractérisé en ce que** les éléments de régulation thermique (2) sont de construction massive dont la température est maintenue constante au cours du processus de préférence par perfusion d'un milieu fluide (M) par un ou plusieurs espaces creux (7) intégrés.

13. Procédé selon l'une des revendications précédentes, **caractérisé en ce que** les éléments de régulation thermique (2) sont réalisés à partir de demi-coques ou de coques partielles (4) divisibles en longueur, dont la face intérieure correspond en négatif à la face extérieure de l'outil de formage.

14. Procédé selon l'une des revendications précédentes, **caractérisé en ce que** les demi-coques ou coques partielles (4) s'ouvrant et se fermant des éléments de régulation thermique (2) sont approchées de l'extérieur de l'outil de formage (1), donc dans un sens radial par rapport au centre de l'outil de formage (1).

15. Procédé selon l'une des revendications précédentes, **caractérisé en ce que** l'outil de formage (1) et les éléments de régulation thermiques (2) sont déplacés l'un par rapport à l'autre pour faire varier la température de moulage, par exemple en sens vertical et/ou horizontal.

16. Procédé selon l'une des revendications précédentes, **caractérisé en ce que** plusieurs éléments de régulation thermique (2a, 2b) pour un déplacement synchrone ou commun sont reliés ou accouplés entre eux et/ou à un châssis commun et/ou à un dispositif d'entraînement commun, en particulier pour un déplacement commun en sens longitudinal de l'outil de formage (1).

17. Dispositif de formage à chaud d'ébauches de tuyau (3) de préférence à partir d'une matière première flexible pour tuyaux préalablement extrudée, comprenant un outil de formage (1) en forme de coque en une ou plusieurs parties et présentant un moule creux pour le logement d'au moins une ébauche de tuyau (3) pendant son formage, en ce que la face intérieure (11) du moule creux correspond en négatif à la forme à imprimer à l'ébauche de tuyau (3), en ce que l'outil de formage (1) ne présente aucun canal intérieur ni autre espace creux permettant la circulation d'un fluide de régulation thermique, tandis que, pour faire varier la température de l'outil de formage (1), des éléments de régulation thermique (2) séparés de celui-ci présentant des demi-coques ou coques partielles (4) se fermant par complémentarité de forme au-dessus du moule sont prévus, dont les faces intérieures (12) orientées vers l'outil de formage (1) sont réalisées en congruence avec la face extérieure (6) de l'outil de formage (1), et qui présentent un dispositif permettant de maintenir constante la température de chaque élément de régulation thermique (2) au cours du processus, en particulier des espaces creux intérieurs pour la perfusion d'un fluide de régulation thermique (M), et en ce que le dispositif est **caractérisé en ce qu'**au moins un élément mécanique est prévu permettant de fermer sélectivement différents éléments de régulation thermique (2) à des températures différentes autour de l'outil de formage (1).

Fig.1

Fig.2a

Fig.2b

4a · 2a

7a

1

4b

4a · 4b

7a · 7b

2b

Fig.3

4a' · 2a' · 4a' · 2b'

6'

5a

5b

1'

4b' · 4b'

Fig.4

Fig.5

Fig.6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013041234 A
- DE 102011114083 A1
- DE 102010020090 A1
- EP 2216066 A1
- WO 2009144028 A